# EUROPÄISCHE PATENTSCHRIFT

(11) **EP 4 079 663 B1**
(45) Veröffentlichungstag und Bekanntmachung des Hinweises auf die Patenterteilung: **06.11.2024**
(21) Anmeldenummer: 22178665.0
(22) Anmeldetag: 11.01.2018
(51) Int. Cl.: B65G 47/61, B65G 47/84, B65G 65/00, B65B 5/04, B65B 35/26, B65B 43/54, B65G 47/38

(54) **BESCHICKUNGSVORRICHTUNG**
FEEDING DEVICE
DISPOSITIF DE CHARGEMENT

(30) Priorität: 26.01.2017 CH 852017
(43) Veröffentlichungstag der Anmeldung: 26.10.2022
(62) Teilanmeldung aus: 18151147.8
(73) Patentinhaber: Ferag AG, 8340 Hinwil (CH)
(72) Erfinder: RUGE, Martin, Starrkirch-Wil (CH); FELIX, Markus, Richterswil (CH)
(74) Vertreter: Rentsch Partner AG

(56) Entgegenhaltungen:
- EP-A1- 2 499 069
- EP-B1- 2 499 069
- WO-A1-2010/085141
- JP-A- 2012 166 820
- US-A- 3 064 406

## Beschreibung

### GEBIET DER ERFINDUNG

Die vorliegende Erfindung betrifft eine Beschickungsvorrichtung zum kontinuierlichen Beschicken von Aufnahmeeinheiten mit Transportgütern.

### HINTERGRUND DER ERFINDUNG

In der Intralogistik spielen Beschickungsvorgänge, bei welchen Aufnahmeeinheiten, wie z.B. Taschen, mit Transportgütern beschickt werden, eine wichtige Rolle. Dabei werden die Transportgüter bei Beschickungsvorgängen trotz der zunehmenden Automatisierung typischerweise noch immer manuell in die Aufnahmeeinheiten eingefüllt, was die Beschickungskapazitäten der betreffenden Förderanlagen stark begrenzt und zu hohen Kosten führt. Aus dem Stand der Technik sind daher verschiedene Lösungen zum Beschicken bekannt, bei welchen das Beladen der Taschen mit Transportgütern automatisch erfolgen kann.

WO2010/085141A1 offenbart eine Beschickungsvorrichtung nach dem Oberbegriff des Anspruchs 1.

Eine automatische Beladestation für in einer Hängeförderanlage transportierte Taschen ist aus der EP219641 5 A2 bekannt. Die Beladestation weist eine obere Zuführ-Schiene für die Transport-Taschen, einen sich an die Zuführ-Schiene anschliessenden Senkrecht-Förderer zum Zuführen der Transport-Taschen in eine untere Belade-Position, eine Einrichtung zum Öffnen der Transport-Taschen in der Belade-Position und eine sich an den Senkrecht-Förderer anschliessende untere Abführ-Schiene zum Abführen der Transport-Taschen aus der Belade-Position auf. Die Zuführ-Schiene mündet von oben über ein oberes Zuführ-Umlenk-Teil in eine Schiene, welche an ihrem unteren Ende über ein Abführ-Umlenk-Teil an die Abführ-Schiene angeschlossen ist. Am Abführ-Umlenk-Teil ist eine Belade-Stopp-Einrichtung mit einem Kolben-Zylinder-Antrieb und einem Anschlag-Bolzen angeordnet. Mittels der Belade-Stopp-Einrichtung wird die Transport-Tasche während dem Beladen in der Belade-Position gehalten und nach dem Beladen wieder freigegeben. Das Beladen der Transport-Taschen erfolgt daher intermittierend, da die Transport-Taschen während dem Beladevorgang in der Belade-Position ruhen, was die Beschickungskapazität reduziert.

Die DE10201 2018925 A1 beschreibt eine Taschen-Hängeförderanlage mit einem Hängeförderer zum Transportieren von Taschen entlang einer Führungsschiene stromabwärts in einer Förderrichtung, wobei die Taschen in einer Transportstellung lotrecht unterhalb der Führungsschiene hängen und wobei die Taschen in einer Beladestellung im Wesentlichen horizontal ausgerichtet sind. Die Taschen-Hängeförderanlage umfasst eine Beladestation, die eine Auslenkeinrichtung aufweist, wobei die Auslenkeinrichtung ein stromaufwärts gelegenes Ende und ein stromabwärts gelegenes Ende aufweist und unterhalb der Führungsschiene des Hängeförderers angeordnet ist. Die Taschen kommen während des Transports in der Förderrichtung in Anlage mit der Auslenkeinrichtung, um die Taschen zumindest anfänglich während eines fortgesetzten Transports in der Förderrichtung aus der lotrechten Transportstellung in die im Wesentlichen horizontale Beladestellung zu drehen. Die Tasche weist eine Aufhängeeinrichtung zum schwenkbaren Koppeln der Tasche an die Führungsschiene des Hängeförderers, eine Rückseite, die in der lotrechten Transportstellung einen oberen Abschnitt und einen unteren Abschnitt aufweist, wobei sich der untere Abschnitt in einer Längsrichtung der Rückseite an den oberen Abschnitt anschliesst, einen Deckel, eine Vorderseite und einen Boden auf. Die Rückseite ist in der Querrichtung jeweils breiter als der Deckel, die Vorderseite und der Boden ausgebildet, so dass die Rückseite zumindest einen, seitlich in Bezug auf die Vorderseite überstehenden, Flügelbereich aufweist, der während eines Transports der Tasche durch die Beladestation zum Drehen der Tasche gegen die Auslenkeinrichtung anstösst und der in der Beladestellung auf der Auslenkeinrichtung aufliegt. Insbesondere sind die Taschen sowohl in der Transportstellung als auch in der Beladestellung parallel zu einer Querrichtung orientiert, die quer, zur Förderrichtung orientiert ist. Obwohl Be- und Entladevorgänge durchgeführt werden können, während die Transportbewegung kontinuierlich fortgesetzt wird, ist die Ausbildung sowohl der Beladestation als auch der Taschen kompliziert und erfordert eine hohe Präzision für den Zeitpunkt des Beladens der durch die Beladestation transportierten Taschen.

### DARSTELLUNG DER ERFINDUNG

Förderanlagen, in welchen Aufnahmeeinheiten mit Transportgütern beschickt und gefördert werden, sollen möglichst hohe Förder- bzw. Beschickungskapazitäten bei einer tiefen Fehlerrate aufweisen. Im Vordergrund stehen dabei die Anforderungen an die Zuverlässigkeit der Beschickungsvorgänge und die Flexibilität bezüglich der zu fördernden Transportgüter.

Es ist daher eine Aufgabe der Erfindung, eine Vorrichtung zum Beschicken von Aufnahmeeinheiten mit Transportgütern bereitzustellen, welche den Stand der Technik mindestens teilweise verbessern.

Diese Aufgabe wird durch die Merkmale des unabhängigen Anspruchs 1 gelöst. Vorteilhafte Ausgestaltungen der Erfindung sind in den abhängigen Ansprüchen und in der vorliegenden Beschreibung und den Figuren gegeben.

Die Erfindung betrifft eine Beschickungsvorrichtung zum kontinuierlichen Beschicken von Aufnahmeeinheiten mit Transportgütern. Die Beschickungsvorrichtung umfasst eine Mehrzahl von Aufnahmeeinheiten, eine Fördervorrichtung, in welcher die Aufnahmeeinheiten förderbar sind, eine Zuführvorrichtung zum Zuführen von Transportgütern, eine Transfervorrichtung, welche ausgebildet ist, die Transportgüter von der Zuführvorrichtung zu übernehmen, zu fördern und an die Aufnahmeeinheiten zu übergeben, wobei die Transfervorrichtung und die Aufnahmeeinheiten bei der Übergabe der Transportgüter gleichgerichtet bewegbar sind.

In der Regel werden zu beschickende Aufnahmeeinheiten von der Fördervorrichtung zur Transfervorrichtung gefördert und nach der Beschickung wieder durch die Fördervorrichtung weggefördert. Die zu beschickenden Aufnahmeeinheiten können zum Beispiel von einem Lager oder anderen Bereichen einer Förderanlage stammen und nach der Beschickung zum Beispiel zu Verarbeitungsstationen weggefördert werden. Vorteilhafterweise ist die Transfervorrichtung derart zur Zuführvorrichtung und zur Fördervorrichtung angeordnet, dass die Transfervorrichtung als Bindeglied zwischen der Zuführvorrichtung, welche die Transportgüter zuführt und der Fördervorrichtung, welche die Aufnahmeeinheiten fördert, dienen kann. Dabei bietet die Beschickungsvorrichtung den Vorteil, dass die Beschickungsvorgänge kontinuierlich ablaufen können, d.h. ohne die Förderbewegung der Aufnahmeeinheiten zu unterbrechen.

Dadurch, dass die Transfervorrichtung und die Aufnahmeeinheiten gleichgerichtet bewegbar sind, kann die Zeit, welche für die Übergabe der Transportgüter an die Aufnahmeeinheiten zur Verfügung steht, erhöht werden, was vorteilhaft für die Zuverlässigkeit der Beschickung ist. Weiter kann durch die gleichgerichtete Bewegung der Transfervorrichtung und der Aufnahmeeinheiten erreicht werden, dass die Förderbewegungen der Aufnahmeeinheiten während der Beschickung sowie vor und/oder nach der Beschickung kontinuierlich ablaufen und abrupte Bewegungsänderungen vermieden werden können.

In einer bevorzugten Ausgestaltung sind die Transfervorrichtung und die Aufnahmeeinheiten bei der Übergabe der Transportgüter taktsynchron bewegbar.

Dadurch, dass die Transfervorrichtung und die Aufnahmeeinheiten taktsynchron bewegbar sind, können die Transportgüter getaktet an die Aufnahmeeinheiten übergeben werden, was die Kontrolle über die Beschickungsvorgänge und die Förderung der beschickten Aufnahmeeinheiten erhöht. Die getaktete Übergabe der Transportgüter an die Aufnahmeeinheiten bietet den weiteren Vorteil, dass eine Toleranz bezüglich des Übergabezeitpunkts und des Übergabeorts innerhalb eines Takts bereitgestellt werden kann, ohne dass Fehler bei der Übergabe entstehen.

Die Transportgüter können Konsumgüter, Stückgüter, vorkommissionierte Pakete, Schachteln o.ä. umfassen.

In einer bevorzugten Ausgestaltung weist die Beschickungsvorrichtung eine Förderstrecke und eine Übergabestrecke auf, welche sich mindestens teilweise überlappen.

Die Übergabe der Transportgüter an die Aufnahmeeinheiten in einer Übergabestrecke bietet den Vorteil, dass die Zeit, welche für die Übergabe zur Verfügung steht, erhöht und die Übergabe kontrolliert erfolgen kann. Durch die teilweise Überlappung der Übergabestrecke mit der Förderstrecke, in welcher die Aufnahmeeinheiten gefördert werden, kann die kontinuierliche Förderung der Aufnahmeeinheiten während und insbesondere vor und/oder nach der Beschickung sichergestellt werden.

Vorzugsweise werden die Transportgüter in der Übergabestrecke vor und/oder während der Übergabe an die Aufnahmeeinheiten durch die Transfervorrichtung derart gefördert, dass die Transportgüter eine im Wesentlichen mit den Aufnahmeeinheiten gleichgerichtete Bewegungskomponente aufweisen. Zur gleichgerichteten Bewegungskomponente überlagert können die Transportgüter, insbesondere während der Übergabe an die Aufnahmeeinheiten, weitere Bewegungskomponenten umfassen. Bei Übergaben, bei welchen die Transportgüter von der Transfervorrichtung in die Aufnahmeeinheiten fallen, kann zum Beispiel zur gleichgerichteten Bewegungskomponente der Transportgüter eine durch Schwerkraft verursachte senkrechte Bewegungskomponente überlagert sein.

In einer Ausgestaltung ist die Fördervorrichtung in der Übergabestrecke unterbrochen ausgebildet. Alternativ kann die Fördervorrichtung in der Übergabestrecke durchgehend ausgebildet sein.

Für den Fall, dass die Fördervorrichtung in der Übergabestrecke unterbrochen ausgebildet ist, können die Aufnahmeeinheiten in der Übergabestrecke, welche mindestens teilweise mit der Förderstrecke überlappt, von der Transfervorrichtung gefördert werden. Dadurch kann vorteilhafterweise erreicht werden, dass Teile der Fördervorrichtung in der Übergabestrecke für die Übergabe der Transportgüter an die Aufnahmeeinheiten nicht im Wege stehen. Für die Ausbildung und/oder Anordnung der Transfervorrichtung kann eine grössere Flexibilität ermöglicht werden, da nicht darauf geachtet werden muss, Teilen der Fördervorrichtung, welche in der Übergabestrecke im Wege stehen könnten, auszuweichen.

Der Fall, dass die Fördervorrichtung in der Übergabestrecke durchgehend ausgebildet ist, bietet den Vorteil, dass die Aufnahmeeinheiten vor, während und nach der Übergabe der Transportgüter an die Aufnahmeeinheiten stets von der Fördervorrichtung gefördert werden, was eine hohe Kontinuität der Förderung der Aufnahmeeinheiten ermöglicht.

Die taktsynchrone und/oder gleichgerichtete Bewegung der Transfervorrichtung und der Aufnahmeeinheiten in der Übergabestrecke wird für eine durchgehende Fördervorrichtung in einer Ausgestaltung dadurch bereitgestellt, dass die Transfervorrichtung Eingriffmittel aufweist, welche derart mit den Aufnahmeeinheiten in der Übergabestrecke wirkverbindbar sind, dass die Bewegungen der Aufnahmeeinheiten und der Transfervorrichtung in der Übergabestrecke synchronisiert werden können. Die Wirkverbindung zwischen den Eingriffmitteln der Transfervorrichtung und den Aufnahmeeinheiten kann durch Eingreifen der Eingriffmittel in Mitnehmerelemente der Aufnahmeeinheiten hergestellt werden. In Ausgestaltungen, bei welchen die Aufnahmeeinheiten in der Fördervorrichtung durch Fördermittel, wie z.B. eine Kette, gefördert werden, kann die Wirkverbindung über Eingreifen der Eingriffmittel in die Fördermittel hergestellt werden.

In einer Ausgestaltung ist die Fördergeschwindigkeit der Aufnahmeeinheiten in der Übergabestrecke auf die Fördergeschwindigkeit der Aufnahmeeinheiten in der Förderstrecke abstimmbar.

Dadurch kann vorteilhafterweise die Kontinuität der Förderung der Aufnahmeeinheiten erhöht und können abrupte Brems- oder Beschleunigungsvorgänge, welche die Fehlerrate erhöhen können, reduziert werden.

Die erhöhte Zeit, welche zur Beschickung der Aufnahmeeinheiten zur Verfügung steht, sowie die Taktung der Beschickung bietet den Vorteil, dass die Fördergeschwindigkeit der Aufnahmeeinheiten in der Übergabestrecke auch auf hohe Fördergeschwindigkeiten der Aufnahmeeinheiten in der Förderstrecke abstimmbar ist, ohne dass die Zuverlässigkeit der Beschickung beeinträchtigt wird.

In einer Ausgestaltung ist die Transfervorrichtung ausgebildet, Aufnahmeeinheiten von der Fördervorrichtung zu übernehmen, in der Transfervorrichtung taktsynchron zu den Transportgütern zu fördern und mit den Transportgütern zu beschicken, und beschickte Aufnahmeeinheiten an die Fördervorrichtung zu übergeben.

Das Fördern in der Transfervorrichtung hat den vorteilhaften Effekt, dass die Übergabe besser kontrolliert werden kann, da u.a. mehr Zeit für die Übergabe zur Verfügung steht. Die Zeit, welche für die Übergabe zur Verfügung steht, kann durch die spezifische Ausgestaltung der Transfervorrichtung, z.B. durch die Form oder durch die Fördergeschwindigkeit der Transfervorrichtung, gesteuert werden, was die Kontrolle über die Beschickung erhöht. Durch das Fördern der Aufnahmeeinheiten in der Transfervorrichtung kann erreicht werden, dass die Übergabe der Transportgüter an die Aufnahmeeinheiten in der Transfervorrichtung erfolgt. Dies reduziert vorteilhafterweise die Fehlerrate bei der Beschickung im Vergleich zu Lösungen aus dem Stand der Technik, bei welchen die Übergabe der Transportgüter an die Aufnahmeeinheiten zwischen verschiedenen Fördervorrichtungen einer Förderanlage erfolgt.

In einer Ausgestaltung weisen die Aufnahmeeinheiten jeweils eine Transporteinheit und mindestens eine Tasche zur Aufnahme von Transportgütern auf, welche fest miteinander verbunden sind, wobei die Transporteinheiten in der Fördervorrichtung und/oder der Transfervorrichtung förderbar sind. Alternativ oder in Ergänzung können die Aufnahmeeinheiten jeweils eine Transporteinheit und mindestens eine Tasche zur Aufnahme von Transportgütern aufweisen, welche lösbar miteinander verbunden sind, wobei die Transporteinheiten in der Fördervorrichtung und/oder der Transfervorrichtung förderbar sind.

Im Zusammenhang mit der vorliegenden Erfindung können unter "Tasche" jegliche Behältnisse zur Aufnahme und zum Transportieren von Transportgütern, wie z.B. Beutel, Säcke, Schachteln, Boxen, Körbe o.ä., fallen.

Die Transporteinheiten können Laufwagen, Teller, Haken, Bügel, Rollenanordnungen o.ä. umfassen.

In einer Ausgestaltung für lösbar miteinander verbundene Transporteinheiten und Taschen übernimmt die Transfervorrichtung jeweils die Taschen, welche in der Transfervorrichtung gefördert und beschickt werden. Die zugehörigen Transporteinheiten der Aufnahmeeinheiten, welche die Taschen an die Transfervorrichtung abgegeben haben, können dabei weitergefördert werden und danach die beschickten Taschen wieder von der Transfervorrichtung übernehmen. Optional können die Transporteinheiten nach Abgabe der Taschen aus der Fördervorrichtung ausgeschleust werden, z.B. falls die Taschen nach dem Beschicken die Transfervorrichtung verlassen und nicht mehr weitergefördert werden müssen oder falls die Taschen von anderen Transporteinheiten übernommen werden.

In einer weiteren Ausgestaltung sind die Aufnahmeeinheiten selbst als Taschen ausgebildet, welche z.B. durch ein Förderband gefördert werden.

Erfindungsgemäß ist die Fördervorrichtung eine Hängefördervorrichtung mit einer Laufschiene, wobei die Transporteinheiten an der Laufschiene mit veränderlichem Abstand zueinander förderbare Laufwagen sind.

Die Laufschiene kann in der Übergabestrecke unterbrochen oder durchgehend ausgebildet sein. Für den Fall, dass die Laufschiene in der Übergabestrecke unterbrochen ausgebildet ist, kann die Laufschiene vor und nach der Übergabestrecke auf verschiedenen Höhen angeordnet sein, insbesondere dann, wenn die Aufnahmeeinheiten durch die Transfervorrichtung in der Übergabestrecke eine Höhendifferenz überwinden können.

In einer Ausgestaltung weist die Beschickungsvorrichtung Ausrichtmittel zum Ausrichten der Orientierung der Taschen vor und/oder bei und/oder nach der Übergabe der Transportgüter an die Taschen auf.

Die Ausrichtmittel können an der Fördervorrichtung oder an der Transfervorrichtung angeordnet sein. In einer Variante können die Ausrichtmittel an den Aufnahmeeinheiten, für Aufnahmeeinheiten mit Transporteinheiten z.B. an den Transporteinheiten, angeordnet sein. Die Ausrichtmittel können die Orientierung der Taschen mechanisch oder magnetisch ausrichten. Vorzugsweise richten die Ausrichtmittel die Orientierung der Taschen vor der Übergabe der Transportgüter derart aus, dass die Taschen die Transportgüter sicher aufnehmen können. Zum Beispiel können die Taschen von einer Querorientierung bezüglich der Förderstrecke zu einer Längsorientierung ausgerichtet werden, falls die Transportgüter von der Transfervorrichtung längsorientiert abgegeben werden. Vor und/oder nach der Transfervorrichtung kann es hingegen vorteilhaft sein, die Taschen bezüglich der Förderstrecke querorientiert zu fördern, da die Taschen so entlang der Förderstrecke weniger Platz einnehmen. Vorzugsweise werden bei quaderförmigen Transportgütern die Transportgüter von der Zuführvorrichtung bei einer längsorientierten Förderung auf einer Längsseite stehend und bei einer querorientierten Förderung liegend zugeführt.

In einer Ausgestaltung weist die Transfervorrichtung Eingriffmittel auf, welche mit den Aufnahmeeinheiten wirkverbindbar sind.

Durch die Eingriffmittel können die Bewegungen der Aufnahmeeinheiten und der Transfervorrichtung synchronisiert und/oder gleichgerichtet werden. Die Wirkverbindung zwischen den Eingriffmitteln der Transfervorrichtung und den Aufnahmeeinheiten kann durch Eingreifen der Eingriffmittel in Mitnehmerelemente der Aufnahmeeinheiten hergestellt werden. Für Aufnahmeeinheiten mit Transporteinheiten sind die Mitnehmerelemente vorzugsweise an den Transporteinheiten angeordnet. Die Mitnehmerelemente und/oder die Eingriffmittel können Stifte, Haken, Ausnehmungen etc. umfassen. Die Wirkverbindung zwischen den Eingriffmitteln und den Aufnahmeeinheiten kann mechanisch oder magnetisch ausgebildet werden.

Durch Eingriff der Eingriffmittel in Mitnehmerelemente der Aufnahmeeinheiten können die Aufnahmeeinheiten von der Transfervorrichtung übernommen und gefördert werden. Alternativ können die Aufnahmeeinheiten auch nach Eingriff der Eingriffmittel in die Mitnehmerelemente weiter in der Fördervorrichtung gefördert werden, wobei die Bewegung der Aufnahmeeinheiten mit der Bewegung der Transfervorrichtung durch den Eingriff der Eingriffmittel synchronisiert und/oder gleichgerichtet abläuft.

In Ausgestaltungen, bei welchen die Aufnahmeeinheiten in der Fördervorrichtung durch Fördermittel, wie z.B. eine Kette, gefördert werden, kann die Wirkverbindung über Eingreifen der Eingriffmittel in die Fördermittel hergestellt werden.

Erfindungsgemäß weist die Transfervorrichtung Übergabefächer zur Aufnahme der Transportgüter auf.

Die Zuführvorrichtung ist vorzugsweise derart zur Transfervorrichtung angeordnet, dass die Transportgüter in die Übergabefächer abgegeben werden können. Die Übergabefächer weisen vorzugsweise Öffnungen auf, welche bei der Übernahme der Transportgüter zur Zuführvorrichtung hin geöffnet sind. In einer Ausgestaltung umfasst die Zuführvorrichtung ein Förderband, auf welchem die Transportgüter gefördert werden können. Das Förderband kann bei der Transfervorrichtung einen geneigten Abschnitt aufweisen, von welchem die Transportgüter schwerkraftbedingt in die Übergabefächer der Transfervorrichtung fallen können. Die Übergabefächer können jeweils ein Transportgut oder bei Bedarf mehrere Transportgüter aufnehmen.

Vorzugsweise sind die Transfervorrichtung und die Aufnahmeeinheiten derart gleichgerichtet bewegbar, dass die Übergabefächer und die Aufnahmeeinheiten bei der Übergabe der Transportgüter an die Aufnahmeeinheiten gleichgerichtet bewegbar sind.

In einer Ausgestaltung weisen die Übergabefächer Führungsmittel zur Führung der Transportgüter auf.

Die Führungsmittel bieten den Vorteil, dass die Transportgüter geführt an die Aufnahmeeinheiten abgegeben werden können. Weiter können die Führungsmittel zur Führung der Transportgüter bei der Übernahme von der Zuführvorrichtung dienen.

Vorzugsweise sind die Führungsmittel als bewegbare Wände ausgebildet. Die Wände können an einem Ende in der Transfervorrichtung fixiert sein und mittels dem freien Ende schwenkbar ausgebildet sein. Alternativ oder in Ergänzung können die Wände verschiebbar oder drehbar ausgebildet sein. Die Wände können sowohl als Auflagefläche für die Transportgüter als auch als Führungsfläche dienen. Die Bewegung der Wände kann durch eine Steuerung steuerbar sein.

In einer Ausgestaltung sind die Wände der Übergabefächer doppelwandig ausgebildet, wobei jeweils eine der Wände bewegbar, insbesondere schwenkbar, und die andere fixiert ausgebildet ist.

Erfindungsgemäß weisen die Übergabefächer zwischen einer geschlossenen und einer offenen Position bewegbare Anschlagmittel auf, welche in der geschlossenen Position die Transportgüter im jeweiligen Übergabefach halten, wobei die Anschlagmittel vorzugsweise steuerbar sind.

Vorzugsweise sind die Anschlagmittel als schwenkbare Klappen ausgebildet. In einer Ausgestaltung sind die Klappen an den Wänden der Übergabefächer angeordnet.

Die Anschlagmittel können derart ausgebildet sein, dass diese durch eine Steuerung geöffnet und/oder geschlossen werden können. Alternativ oder in Ergänzung können die Anschlagmittel mechanisch derart ausgebildet sein, dass sie lagebedingt und/oder lastbedingt, z.B. mit Hilfe eines lösbaren Schnappmechanismus, geöffnet und/oder geschlossen werden können.

In einer Ausgestaltung bilden die Anschlagmittel in der offenen Position eine Führung für die Übernahme der Transportgüter von der Zuführvorrichtung und/oder für die Übergabe der Transportgüter an die Aufnahmeeinheiten.

Dies bietet den Vorteil einer verbesserten geführten Übernahme und/oder Übergabe der Transportgüter, so dass die Fehlerrate reduziert werden kann. In Ausgestaltungen, bei welchen die Anschlagmittel als schwenkbare Klappen ausgebildet sind, können die Klappen in der offenen Position eine Erweiterung der Wände der Übergabefächer bilden und dadurch die Transportgüter führen.

Optional können die Anschlagmittel bei Übernahme von Aufnahmeeinheiten von der Fördervorrichtung und/oder bei Übergabe von Aufnahmeeinheiten an die Fördervorrichtung eine Führung für die Aufnahmeeinheiten ausbilden.

In einer Ausgestaltung sind die Anschlagmittel ausgebildet, beim Bewegen von der geschlossenen zur offenen Position eine Aufnahmeöffnung einer zu beschickenden Aufnahmeeinheit zu öffnen und/oder offen zu halten.

Vorzugsweise sind die Anschlagmittel kurz vor der Übergabe der Transportgüter an die Aufnahmeeinheiten von der geschlossenen zur offenen Position bewegbar.

Dies bietet den Vorteil, dass mit einer Bewegung der Anschlagmittel in die offene Position sowohl das Übergabefach mit dem zu übergebenden Transportgut freigegeben als auch eine Aufnahmeöffnung einer zu beschickenden Aufnahmeeinheit geöffnet werden kann. Während der Übergabe des Transportguts kann die Aufnahmeöffnung der Aufnahmeeinheit offen gehalten werden, so dass eine zuverlässige Übergabe des Transportguts erfolgen kann.

In Ausgestaltungen, bei welchen die Aufnahmeeinheit eine Transporteinheit und eine Tasche umfasst, weist die Tasche eine Aufnahmeöffnung auf.

In einer Ausgestaltung weist die Tasche eine schwenkbare Bügelvorrichtung auf, welche die Aufnahmeöffnung der Tasche durch Schwenken öffnen bzw. schliessen kann. Optional können in solchen Ausgestaltungen die Anschlagmittel mit der Bügelvorrichtung derart wirkverbindbar sein, dass die Bügelvorrichtung durch die Anschlagmittel geschwenkt und so die Aufnahmeöffnung der Tasche geöffnet und/oder offen gehalten bzw. geschlossen werden kann.

In einer Ausgestaltung ist die Transfervorrichtung endlos umlaufend ausgebildet. Vorzugsweise weist die Transfervorrichtung ein Rad zum Fördern von Transportgütern und/oder Aufnahmeeinheiten auf.

Die Transfervorrichtung bewegt sich dabei vorzugsweise derart umlaufend, dass sich die Transfervorrichtung und die Aufnahmeeinheiten in der Übergabestrecke gleichgerichtet bewegen.

Vorzugsweise ist das Rad senkrecht in einer Ebene wie die Förderstrecke angeordnet und kann durch Rotation Transportgüter und/oder Aufnahmeeinheiten fördern.

Vorzugsweise weist das Rad radial orientierte Übergabefächer auf. Die Übergabefächer können bewegbare und/oder fixierte Wände aufweisen, welche jeweils zum Radmittelpunkt hin an einem Angelpunkt angebracht sind, wobei die bewegbaren Wände vorzugsweise um diesen Angelpunkt schwenkbar sind. Alternativ oder in Ergänzung können die bewegbaren Wände verschiebbar oder drehbar ausgebildet sein. Die Wände können als Auflagefläche für die Transportgüter und/oder als Führungsfläche dienen.

Die Bewegung der Wände kann durch eine Steuerung steuerbar sein. Vorzugsweise umfasst das Rad eine Seitenscheibe, welche die Übergabefächer quer zur Förderstrecke begrenzt. Die Seitenscheibe kann mit Vorteil eine Führung der Transportgüter bereitstellen.

In einer Ausgestaltung mit einer Seitenscheibe ist das Rad geneigt angeordnet. Dies bietet den Vorteil, dass die Seitenscheibe nebst den Wänden eine weitere Auflagefläche für die Transportgüter bilden kann und bei der Übergabe der Transportgüter als Führungsfläche dienen kann.

Das Rad bietet den Vorteil, dass die Transportgüter in der oberen Hälfte des Rads schwerkraftbedingt in den Übergabefächern gehalten werden und in der unteren Hälfte des Rads schwerkraftbedingt aus den Übergabefächern herausfallen und dadurch in zu beschickende Aufnahmeeinheiten übergeben werden können.

Die Übergabefächer weisen vorzugsweise Anschlagmittel auf, welche am Rand des Rads an den Wänden der Übergabefächer schwenkbar angeordnet sind.

Um ein vorzeitiges Herausfallen der Transportgüter zu vermeiden, können die Anschlagmittel in der geschlossenen Position die Transportgüter in den Übergabefächern halten. Vorzugsweise weist das Rad am Rand angeordnete Eingriffmittel auf, welche mit Aufnahmeeinheiten wirkverbindbar sind.

Durch Wirkverbindung der Eingriffmittel mit den Aufnahmeeinheiten kann die Bewegung des Rad mit der Bewegung der Aufnahmeeinheiten synchronisiert werden. Vorzugsweise ist pro Übergabefach ein Eingriffmittel vorgesehen, so dass pro Übergabefach eine Aufnahmeeinheit zum Beschicken mitgefördert wird und auf diese Weise eine Taktung bereitgestellt werden kann. Die Übergabestrecke wird vorzugsweise durch den Teil des Umfangs des Rads, welcher mit der Förderstrecke überlappt, bestimmt und kann daher in der Länge vorteilhafterweise durch Variation der Grösse des Rads modifiziert werden.

Vorzugsweise ist die Zuführvorrichtung am oberen Bereich des Rads angeordnet und übergibt schwerkraftbedingt die Transportgüter an die Übergabefächer des Rads. Durch Rotation können die Transportgüter in den unteren Bereich des Rads gefördert werden und dort schwerkraftbedingt, und vorzugsweise durch Öffnen der Anschlagmittel, an zu beschickende Aufnahmeeinheiten übergeben werden. Die beschickten Aufnahmeeinheiten können mittels der Eingriffmittel durch Rotation des Rads weitergefördert werden, und in Ausgestaltungen, bei welchen die Aufnahmeeinheiten von der Transfervorrichtung gefördert werden, wieder an die Fördervorrichtung übergeben werden.

In einer Ausgestaltung weist die Transfervorrichtung ein zweites Rad auf, welches stromabwärts angeordnet ist. Das zweite Rad weist vorzugsweise Eingriffmittel auf, welche mit den Aufnahmeeinheiten wirkverbindbar sind. Das zweite Rad kann mit Vorteil dazu dienen, die beschickten Aufnahmeeinheiten mit weiteren Transportgütern zu beschicken. Die zwei Räder können in separaten Transfervorrichtungen mit separaten zu übergebenden Transportgütern oder in einer gemeinsamen Transfervorrichtung, z.B. durch Verbindung mittels einer Kette oder Band, angeordnet sein. Das zweite Rad bietet den Vorteil, dass die Übergabestrecke verlängert werden kann, was die Zeit, welche für die Übergabe zur Verfügung steht, erhöht. Optional kann die Transfervorrichtung weitere Räder umfassen.

In einer Ausgestaltung umfasst die Transfervorrichtung einen Rundlauf. Vorzugsweise umfasst der Rundlauf zwei Umlenkrollen und einen oberen Trum sowie einen unteren Trum. Der Rundlauf umfasst vorzugsweise Übergabefächer, in welchen die Transportgüter gefördert werden können. Vorzugsweise werden die Transportgüter der Zuführvorrichtung vom Rundlauf vor dem oder vom oberen Trum übernommen und vor dem oder vom unteren Trum an die Aufnahmeeinheiten übergeben. Durch die Ausgestaltung der Transfervorrichtung mit einem Rundlauf kann vorteilhafterweise die Übergabestrecke verlängert werden, was die verfügbare Zeit für die Übergabe der Transportgüter an die Aufnahmeeinheiten verlängert.

In einer Ausgestaltung weist die Beschickungsvorrichtung Öffnungsmittel auf, welche ausgebildet sind, eine Aufnahmeöffnung einer zu beschickenden Aufnahmeeinheit zu öffnen und/oder offen zu halten.

Die Öffnungsmittel können an der Fördervorrichtung oder an der Transfervorrichtung angeordnet sein. Alternativ oder in Ergänzung können die Öffnungsmittel an den Aufnahmeeinheiten angeordnet sein. In Ausgestaltungen, bei welchen die Aufnahmeeinheiten Taschen aufweisen, können die Öffnungsmittel an den Taschen angeordnet sein. Während der Übergabe des Transportguts kann die Aufnahmeöffnung der Aufnahmeeinheit offen gehalten werden, so dass eine zuverlässige Übergabe des Transportguts erfolgen kann.

In einer Ausgestaltung können die Öffnungsmittel jeweils eine an den Taschen angeordnete schwenkbare Bügelvorrichtung umfassen, welche die Aufnahmeöffnung der Tasche durch Schwenken öffnen und/oder offen halten bzw. schliessen kann.

Eine Ausführungsform umfasst eine Förderanlage mit einer Beschickungsvorrichtung gemäss der vorliegenden Beschreibung.

Die Fördervorrichtung kann die Aufnahmeeinheiten aus anderen Fördervorrichtungen oder Bearbeitungsstationen der Förderanlage übernehmen und/oder übergeben.

In einer Ausgestaltung weist die Förderanlage eine Steuerung auf, welche die Übergabe der Transportgüter an die Aufnahmeeinheiten steuert.

Eine Ausführungsform umfasst ein Verfahren zum Betrieb einer Beschickungsvorrichtung gemäss der vorliegenden Beschreibung, umfassend die Schritte: i) Zuführen von Transportgütern durch die Zuführvorrichtung; ii) Übernahme der Transportgüter durch die Transfervorrichtung; iii) Fördern der Transportgüter in der Transfervorrichtung; iv) Zuführen von zu beschickenden Aufnahmeeinheiten durch die Fördervorrichtung; v) Übergabe der Transportgüter an die Aufnahmeeinheiten bei gleichgerichtetem Bewegen der Transfervorrichtung und der Aufnahmeeinheiten. Das Verfahren bietet den Vorteil, dass die Beschickungsvorgänge kontinuierlich ablaufen können, d.h. ohne die Förderbewegung der Aufnahmeeinheiten zu unterbrechen. Durch das gleichgerichtete Bewegen der Transfervorrichtung und der

Aufnahmeeinheiten kann die Zeit, welche für die Übergabe der Transportgüter an die Aufnahmeeinheiten zur Verfügung steht, erhöht werden, was vorteilhaft für die Zuverlässigkeit der Beschickung ist. Weiter kann durch das gleichgerichtete Bewegen der Transfervorrichtung und der Aufnahmeeinheiten erreicht werden, dass die Förderbewegungen der Aufnahmeeinheiten während der Beschickung sowie vor und/oder nach der Beschickung kontinuierlich ablaufen und abrupte Bewegungsänderungen vermieden werden können.

In einer Ausgestaltung des Verfahrens bewegen sich die Transfervorrichtung und die Aufnahmeeinheiten bei der Übergabe der Transportgüter an die Aufnahmeeinheiten taktsynchron.

In Ausgestaltungen mit Übergabefächern bewegen sich die Transfervorrichtung und die Aufnahmeeinheiten vorzugsweise derart, dass sich die Übergabefächer und die Aufnahmeeinheiten bei der Übergabe der Transportgüter an die Aufnahmeeinheiten taktsynchron bewegen.

Durch das taktsynchrone Bewegen der Transfervorrichtung und der Aufnahmeeinheiten können die Transportgüter getaktet an die Aufnahmeeinheiten übergeben werden, was die Kontrolle über die Beschickungsvorgänge und die Förderung der beschickten Aufnahmeeinheiten erhöht.

In einer Ausgestaltung des Verfahrens übernimmt die Transfervorrichtung die zu beschickenden Aufnahmeeinheiten von der Fördervorrichtung, fördert diese in der Transfervorrichtung taktsynchron zu den Transportgütern und beschickt diese mit den Transportgütern, und übergibt die beschickten Aufnahmeeinheiten an die Fördervorrichtung.

In einer Ausgestaltung des Verfahrens werden die Aufnahmeeinheiten in einer Förderstrecke gefördert und in einer Übergabestrecke mit Transportgütern beschickt, wobei die Förderstrecke und die Übergabestrecke mindestens teilweise überlappen.

In einer Ausgestaltung des Verfahrens wird die Fördergeschwindigkeit der Aufnahmeeinheiten in der Übergabestrecke auf die Fördergeschwindigkeit der Aufnahmeeinheiten in der Förderstrecke abgestimmt.

### LISTE DER FIGUREN

Ausführungsformen der Erfindung werden anhand der nachfolgenden schematischen Figuren und der dazugehörigen Beschreibung näher erläutert. Es zeigen:
- Fig. 1: eine Seitenansicht einer ersten Ausführungsform einer Beschickungsvorrichtung;
- Fig. 2: eine Seitenansicht einer zweiten Ausführungsform einer Beschickungsvorrichtung;
- Fig. 3: eine Seitenansicht einer dritten Ausführungsform einer Beschickungsvorrichtung;
- Fig. 4: eine Seitenansicht einer vierten Ausführungsform einer Beschickungsvorrichtung;
- Fig. 5: eine Seitenansicht einer fünften Ausführungsform einer Beschickungsvorrichtung.

### BESCHREIBUNG EXEMPLARISCHER AUSFÜHRUNGSFORMEN

Um die Erfindung zu veranschaulichen, werden bevorzugte Ausführungsformen mit Bezug auf die Figuren näher beschrieben.

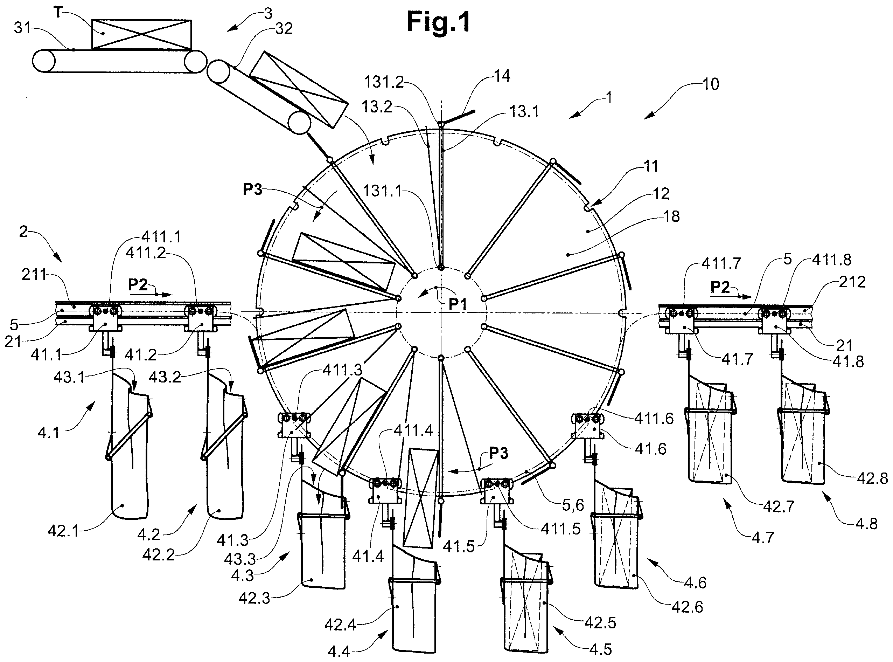

Figur 1 zeigt eine schematische Seitenansicht einer ersten Ausführungsform einer Beschickungsvorrichtung 10 mit einer Transfervorrichtung mit einem Rad 1, einer Hängefördervorrichtung 2 und einer Zuführvorrichtung 3. Das Rad 1 ist endlos umlaufend, bzw. rotierbar, ausgebildet (Pfeil P1) und weist Übergabefächer 12 auf, welche Transportgüter T übernehmen können. Die Zuführvorrichtung 3 umfasst Förderbänder 31, 32, auf welchen die Transportgüter T an das Rad 1 zugeführt werden. Vom geneigt ausgebildeten Förderband 32 fallen die Transportgüter T schwerkraftbedingt in die Übergabefächer 12 des Rads 1. Das Rad weist eine Seitenscheibe 18 auf, welche senkrecht angeordnet ist und die Übergabefächer 12 quer zur Rotationsrichtung (Pfeil P1) begrenzt. Die Hängefördervorrichtung 2 umfasst eine Laufschiene 21. Die Zuführvorrichtung 3 ist derart zum Rad 1 angeordnet, dass die Transportgüter T in der gleichen Richtung wie Aufnahmeeinheiten 4.1 -4.8 zugeführt werden.

In der Figur 1 sind Aufnahmeeinheiten 4.1-4.8 gezeigt, welche jeweils Laufwagen 41.1-41.8 und Taschen 42.1-42.8 aufweisen, welche fest miteinander verbunden sind. Die Taschen 42.1-42.8 weisen Aufnahmeöffnungen 43.1, 43.2, 43.3,... auf und sind zur Aufnahme von Transportgütern T ausgebildet. Die Laufwagen 41.1 - 41.8 sind mit veränderlichem Abstand zueinander auf der Laufschiene 21 in Richtung des Pfeils P2 förderbar. Die Beschickungsvorrichtung 10 weist eine Förderstrecke 5 auf, in welcher die Aufnahmeeinheiten 4.1-4.8 förderbar sind, sowie eine Übergabestrecke 6, welche mit der Förderstrecke 5 überlappt. Die Taschen 42.1-42.8 werden bezüglich der Förderstrecke 5 querorientiert gefördert, d.h. dass die Taschen 42.1-42.8 quer zur Förderstrecke 5 ihre grösste horizontale Ausdehnung aufweisen. Die Übergabestrecke 6 wird durch einen Randabschnitt des Rads 1 im unteren Bereich des Rads 1 gebildet. In der Übergabestrecke 6 werden die Aufnahmeeinheiten vom Rad 1 gefördert und mit den Transportgütern T beschickt. Von der Übergabestrecke 6 werden die beschickten Aufnahmeeinheiten durch das Rad 1 dann wieder an die Förderstrecke 5 übergeben, von wo die beschickten Aufnahmeeinheiten weggefördert werden.

Die Übergabefächer 12 werden von ersten Wänden 13.1 begrenzt. Die Übergabefächer 12 weisen zweite Wände 13.2 auf, welche bewegbar am Rad 1 angebracht sind. Die zweiten Wände 13.2 können jeweils an einer ersten Wand 13.1 anliegen und zusammen eine Doppelwand ausbilden. Die zweiten Wände 13.2 sind jeweils innerhalb eines Übergabefachs 12 schwenkbar um die Angelpunkte 131.1 gelagert und können zur Führung der TransportgüterT in den Übergabefächern 12 geschwenkt werden, was durch die Pfeile P3 illustriert ist. Die ersten Wände 13.1 sind fixiert ausgebildet und dienen als Auflagefläche für die Transportgüter T in den Übergabefächern 12. An Endangelpunkten 131.2 der ersten Wände 13.1 sind als schwenkbare Klappen 14 ausgebildete Anschlagmittel gelagert. Die Klappen 14 sind zwischen einer geschlossenen Position, in welcher die Klappen 14 die Transportgüter T in den Übergabefächern 12 halten und einer offenen Position schwenkbar. In der offenen Position können die Klappen 14 als Führung für die Transportgüter T dienen, welche vom Förderband 32 in die Übergabefächer 12 fallen. Nach der Übernahme der Transportgüter T von der Zuführvorrichtung 3 schwenken die Klappen 14 in die geschlossene Position, so dass die Transportgüter T in den Übergabefächern 12 gehalten werden. Kurz vor der Übergabe der Transportgüter T von den Übergabefächern 12 des Rads 1 an die Aufnahmeeinheiten schwenken die Klappen 14 in die offene Position, so dass die Transportgüter T freigegeben werden können. Bei der Übergabe der Transportgüter T an die Aufnahmeeinheiten halten die Klappen 14 die Aufnahmeöffnungen der Aufnahmeeinheiten offen, was in der Figur 1 bei der Aufnahmeeinheit 4.3 und der Aufnahmeöffnung 43.3 der Tasche 42.3 ersichtlich ist. Die schwenkbaren zweiten Wände 13.2 dienen insbesondere bei der Übergabe der Transportgüter T an die Aufnahmeeinheiten als Führung, was in der Figur 1 für die Übergabe in die Aufnahmeeinheiten 4.3, 4.4 ersichtlich ist.

Das Rad 1 weist für jedes Übergabefach 12 am umlaufenden Rand als Ausnehmungen 11 ausgebildete Eingriffmittel auf, welche in Mitnehmerelemente 411.1-411.8 der Transporteinheiten 41.1-41.8 eingreifen können. Durch Eingreifen der Ausnehmungen 11 in die Mitnehmerelemente 411.1-411.8 können die Aufnahmeeinheiten in der Übergabestrecke 6 durch das Rad 1 gefördert werden, was in der Figur 1 anhand der Aufnahmeeinheiten 4.3-4.6 ersichtlich ist. Die Laufschiene 21 der Hängefördervorrichtung 2 ist in der Übergabestrecke 6 unterbrochen ausgebildet, so dass ein erster Laufschienenabschnitt 211 stromaufwärts der Übergabestrecke 6 und ein zweiter Laufschienenabschnitt 21 2 stromabwärts der Übergabestrecke 6 angeordnet ist. Auf dem ersten Laufschienenabschnitt 211 werden die Transporteinheiten mit den zu beschickenden Aufnahmeeinheiten an das Rad 1 zugeführt und an das Rad 1 übergeben. Vom Rad 1 werden die Transporteinheiten mit den beschickten Aufnahmeeinheiten dann an den zweiten Laufschienenabschnitt 212 übergeben und weggefördert. In der Figur 1 befinden sich im ersten Laufschienenabschnitt 211 die Transporteinheiten 411.1 und 411.2 der Aufnahmeeinheiten 4.1 und 4.2 und im zweiten Laufschienenabschnitt 212 die Transporteinheiten 411.7 und 411.8 der Aufnahmeeinheiten 4.7 und 4.8. Die ersten und zweiten Laufschienenabschnitte 211 und 212 sind auf der gleichen Höhe angeordnet.

Wie in der Figur 1 ersichtlich ist, bewegen sich das rotierende Rad 1, bzw. die Übergabefächer 12, und die Aufnahmeeinheiten in der Übergabestrecke 6 gleichgerichtet und taktsynchron, so dass eine zuverlässige und kontinuierliche Übergabe der Transportgüter T in die Taschen der Aufnahmeeinheiten ermöglicht wird.

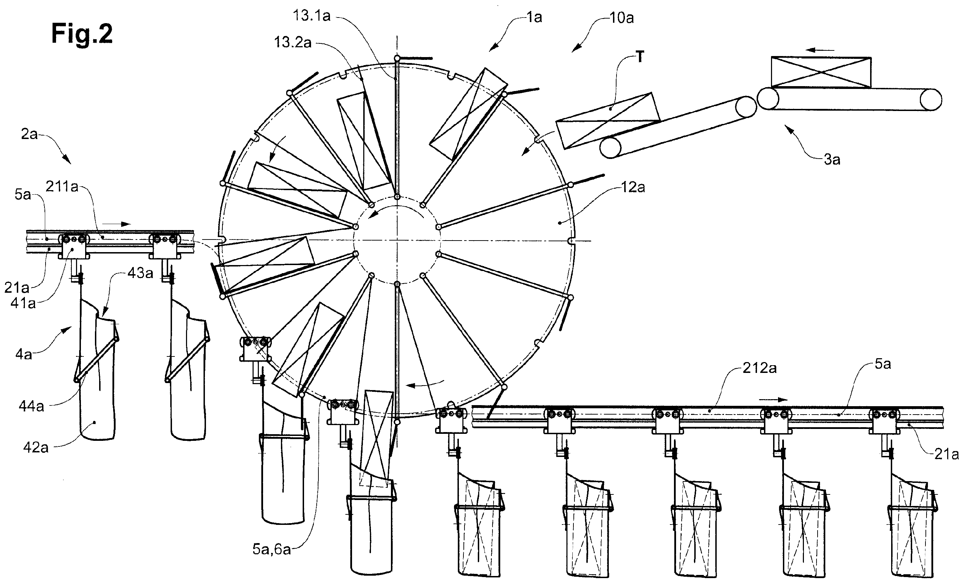

Figur 2 zeigt eine schematische Seitenansicht einer zweiten Ausführungsform einer Beschickungsvorrichtung 10a mit einer Transfervorrichtung mit einem Rad 1a, einer Hängefördervorrichtung 2a und einer Zuführvorrichtung 3a. Die Hängefördervorrichtung 2a umfasst eine Laufschiene 21a. Die Aufnahmeeinheiten 4a (der Einfachheit halber ist in der Figur 2 nur einer der Aufnahmeeinheiten mit Bezugszeichen versehen) weisen jeweils Laufwagen 41a und Taschen 42a auf, welche fest miteinander verbunden sind. Die Taschen 42a weisen Aufnahmeöffnungen 43a auf und sind zur Aufnahme der Transportgüter T ausgebildet. An den Taschen 42a sind schwenkbare Bügelvorrichtungen 44a angeordnet, mittels welchen die Aufnahmeöffnungen 43a geschlossen und geöffnet, sowie offen gehalten werden können. Die Laufwagen 41a können mit veränderlichem Abstand zueinander auf der Laufschiene 21a gefördert werden. Die Beschickungsvorrichtung 10a weist eine Förderstrecke 5a auf, in welcher die Aufnahmeeinheiten 4a förderbar sind, sowie eine Übergabestrecke 6a, welche mit der Förderstrecke 5a überlappt. Die Übergabestrecke 6a wird durch einen Randabschnitt im unteren Bereich des Rads 1a gebildet. In der Übergabestrecke 6a werden die Aufnahmeeinheiten 4a vom Rad 1a gefördert und mit den Transportgütern T beschickt. Von der Übergabestrecke 6a werden die beschickten Aufnahmeeinheiten 4a durch das Rad 1a dann wieder an die Förderstrecke 5a übergeben, von wo die beschickten Aufnahmeeinheiten 4a weggefördert werden.

Die Laufschiene 21a der Hängefördervorrichtung 2a ist in der Übergabestrecke 6a unterbrochen ausgebildet, so dass stromaufwärts der Übergabestrecke 6a ein erster Laufschienenabschnitt 211a und stromabwärts der Übergabestrecke 6a ein zweiter Laufschienenabschnitt 212a angeordnet ist. Der erste Laufschienenabschnitt 211a und der zweite Laufschienenabschnitt 212a sind auf unterschiedlicher Höhe angeordnet, wobei der Höhenunterschied des ersten und des zweiten Laufschienenabschnitts 211a und 21 2a durch das Rad 1a überwunden wird.

Die Zuführvorrichtung 3a ist derart zum Rad 1a angeordnet, dass die Transportgüter T in der entgegengesetzten Richtung wie die Aufnahmeeinheiten 4a zugeführt werden.

Das Rad 1a weist Übergabefächer 12a auf, welche von ersten Wänden 13.1a begrenzt werden. Die Übergabefächer 1 2a weisen zweite Wände 13.2a auf, welche bezüglich dem Rad 1a bewegbar sind. Die zweiten Wände 13.2a sind jeweils innerhalb eines Übergabefachs 12a schwenkbar ausgebildet und dienen bei der Übergabe der Transportgüter T an die Aufnahmeeinheiten 4a als Führung. Die ersten Wände 13.1a sind fixiert ausgebildet. Die zweiten Wände 13.2a können jeweils an einer ersten Wand 13.1a anliegen und zusammen eine Doppelwand ausbilden. Bei der Übernahme der Transportgüter T von der Zuführvorrichtung 3a liegen die zweiten Wände 13.2a jeweils an den ersten Wänden 13.1a an, so dass die Transportgüter T jeweils auf zweiten Wänden 13.2a zu liegen kommen. Durch Rotation des Rads 1a schwenken sich die zweiten Wände 13.2a jeweils weg von den ersten Wänden 13.1a, an welchen sie anliegen, so dass bis zur Übergabe an die Aufnahmeeinheiten 4a die (jeweils gegenüberliegenden) ersten Wände 13.1a als Auflagefläche für die Transportgüter T dienen.

Das rotierende Rad 1a und die Aufnahmeeinheiten 4a bewegen sich in der Übergabestrecke 6a gleichgerichtet und taktsynchron, so dass eine zuverlässige und kontinuierliche Übergabe der Transportgüter T in die Taschen 42a der Aufnahmeeinheiten 4a ermöglicht wird.

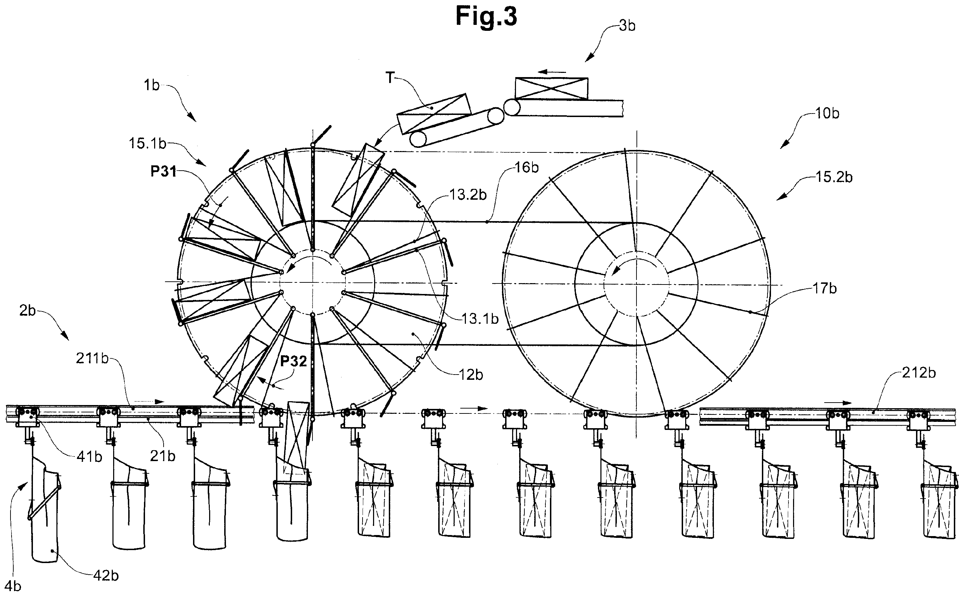

Figur 3 zeigt eine schematische Seitenansicht einer dritten Ausführungsform einer Beschickungsvorrichtung 10b mit einer Transfervorrichtung 1b, einer Hängefördervorrichtung 2b und einer Zuführvorrichtung 3b. Die Hängefördervorrichtung 2b umfasst eine unterbrochen ausgebildete Laufschiene 21b mit einem ersten Laufschienenabschnitt 211b und einem zweiten Laufschienenabschnitt 212b. Die Transfervorrichtung 1b umfasst ein erstes Rad 15.1b und ein zweites Rad 15.2b. Die zwei Räder 15.1b und 15.2b sind durch ein Band 16b wirkverbunden und können dadurch synchron rotiert werden. Die Zuführvorrichtung 3b führt Transportgüter T zum ersten Rad 15.1b, welches die Transportgüter T an Aufnahmeeinheiten 4b übergibt. Die Aufnahmeeinheiten 4b umfassen jeweils eine Tasche 42b und eine Transporteinheit, welche als in der Laufschiene 21b förderbarer Laufwagen 41b ausgebildet ist. Das erste Rad 15.1b weist Übergabefächer 12b auf, welche durch erste Wände 13.1b begrenzt werden. Das erste Rad 15.1b weist zweite Wände 13.1b auf, welche bezüglich dem ersten Rad 15.1b bewegbar sind. Die zweiten Wände 13.2b sind jeweils innerhalb eines Übergabefachs 12b schwenkbar ausgebildet und bilden bei der Übergabe der Transportgüter T an die Aufnahmeeinheiten 4b eine Führung. Bei der Übernahme der Transportgüter T von der Zuführvorrichtung 3b kommen die Transportgüter T jeweils auf den zweiten Wänden 13.2b liegen. Bei Rotation des Rads 15.1b schwenken sich die zweiten Wände 13.2b, sodass die Transportgüter T auf die ersten Wände 13.1b, welche fixiert ausgebildet sind, zu liegen kommen. Die zweiten Wände 13.2b schwenken sich dabei so weit in Richtung des Pfeils P31, dass sie auf den Transportgütern T aufliegen und diese klemmend im Übergabefach 12b festhalten. Die zweiten Wände 13.2b sind derart gelagert, dass sie kurz vor der Übergabe der Transportgüter T an die Aufnahmeeinheiten 4b in Richtung des Pfeils P32 schwenken und so die Transportgüter T freigeben.

Das zweite Rad 1 5.2b weist Speichen 17b auf, welche mit den Laufwagen 41b der Aufnahmeeinheiten 4b in Wirkverbindung treten und die Laufwagen 41b in den stromabwärts angeordneten zweiten Laufschienenabschnitt 212b übergeben können. Obwohl in der Figur 3 nicht gezeigt, ist es möglich, das zweite Rad 15.2b zu verwenden, um weitere Transportgüter T analog dem ersten Rad 15.1b in die durch das erste Rad 15.1b beschickten Aufnahmeeinheiten 4b zu übergeben.

Die Förderung der Aufnahmeeinheiten 4b zwischen den Rädern 15.1b und 15.2b ist in der Figur 3 nur schematisch angedeutet. Die Förderung der Aufnahmeeinheiten 4b zwischen den Rädern 15.1b und 1 5.2b kann z.B. durch geeignete Fördermittel, wie z.B. einer Kette, erfolgen.

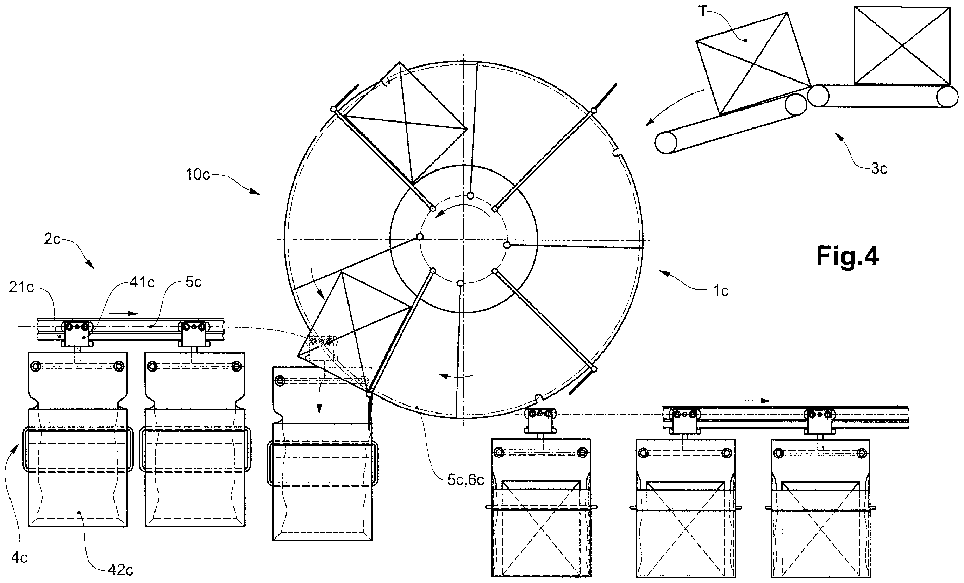

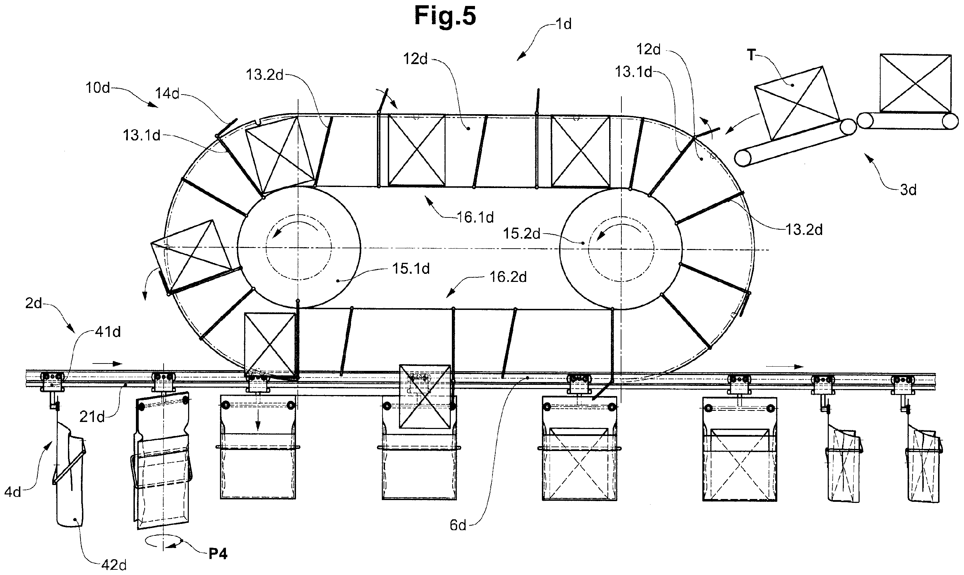

Figur 4 zeigt eine schematische Seitenansicht einer vierten Ausführungsform einer Beschickungsvorrichtung 10c mit einer Zuführvorrichtung 3c, einer Hängefördervorrichtung 2c und einer Transfervorrichtung mit einem Rad 1c. Die Hängefördervorrichtung 2c umfasst eine Laufschiene 21c. Die Beschickungsvorrichtung 10c weist Aufnahmeeinheiten 4c auf, welche jeweils eine Tasche 42c und eine als Laufwagen 41c ausgebildete Transporteinheit aufweisen. Die Laufwagen 41c können auf der Laufschiene 21c mit veränderlichem Abstand gefördert werden. Die Taschen 42c werden bezüglich der Förderstrecke 5c und der Übergabestrecke 6c längsorientiert gefördert, d.h. dass die Taschen 42c längs der Förderstrecke 5c und der Übergabestrecke 6c ihre grösste horizontale Ausdehnung aufweisen. Die Transportgüter T werden entsprechend auf der Zuführvorrichtung 3c längsorientiert zugeführt und im Rad 1c längsorientiert gefördert. Die Laufschiene 21c ist in der Übergabestrecke 5c durchgehend ausgebildet, obwohl in der Figur 5 dieser Teil der Laufschiene 21c der besseren Übersichtlichkeit halber gestrichelt dargestellt ist. Die Laufschiene 21c kann in der Übergabestrecke 5c aufgrund der längsorientierten Übergabe der Transportgüter T an die Taschen 42c durchgehend ausgebildet werden, ohne bei der Übergabe der Transportgüter T an die Taschen 42c im Wege zu stehen.

Figur 5 zeigt eine schematische Seitenansicht einer fünften Ausführungsform einer Beschickungsvorrichtung 10d mit einer Zuführvorrichtung 3d, einer Hängefördervorrichtung 2d und einer Transfervorrichtung 1d. Die Hängefördervorrichtung 2d umfasst eine Laufschiene 21d. Die Transfervorrichtung umfasst einen Rundlauf 1d mit einem oberen Trum 16.1d und einem unteren Trum 16.2d. Der Rundlauf 1d weist eine erste Umlenkrolle 15.1d und eine zweite Umlenkrolle 1 5.2d auf. Die Zuführvorrichtung 3d führt Transportgüter T zu, welche vom Rundlauf 1d vor dem oberen Trum 16.1d übernommen und vom oberen Trum 16.1d zum unteren Trum 16.2d gefördert werden. Vom unteren Trum 16.2d werden die Transportgüter T an die Aufnahmeeinheiten 4d übergeben. Der Rundlauf 1d weist Übergabefächer 1 2d auf, welche von ersten und zweiten Wänden 13.1d und 13.2d begrenzt werden und in welchen die Transportgüter T aufnehmbar sind. An den ersten Wänden 13.1d sind zwischen einer offenen und geschlossenen Position schwenkbare Klappen 14d angebracht, welche in der geschlossenen Position die Transportgüter T in den Übergabefächern 12d halten können.

Die Aufnahmeeinheiten 4d umfassen jeweils eine Tasche 42d und eine Transporteinheit, welche als in der Laufschiene 21d förderbarer Laufwagen 41d ausgebildet ist. An den Laufwagen 41d sind Ausrichtmittel angebracht (nicht gezeigt in der Figur 5), welche die Orientierung der Taschen 42d kurz vor der Übergabe der Transportgüter T von einer Querorientierung in eine Längsorientierung ändern (Pfeil P4). Die Transportgüter T werden von der Zuführvorrichtung 3d längsorientiert zugeführt und vom Rundlauf 1d längsorientiert gefördert und an die Taschen 42d übergeben. Die Orientierung der Taschen 42d wird nach der Übergabe der Transportgüter T durch die Ausrichtmittel wieder von der Längsorientierung in die Querorientierung geändert.

Die Laufschiene 21d ist in der Übergabestrecke 6d durchgehend ausgebildet. Aufgrund der längsorientierten Übergabe der Transportgüter T an die Taschen 42d kann die Laufschiene 21d in der Übergabestrecke 6d durchgehend ausgebildet werden, ohne dass die Laufschiene 21d bei der Übergabe der Transportgüter T an die Taschen 42d im Wege steht.

## Patentansprüche

1. Beschickungsvorrichtung (10, 10a-d) zum kontinuierlichen Beschicken von Aufnahmeeinheiten (4.1-4.8, 4a-d) mit Transportgütern (T), die Beschickungsvorrichtung (10, 10a-d) umfassend eine Mehrzahl von Aufnahmeeinheiten (4.1-4.8, 4a-d), eine Fördervorrichtung (2, 2a-d), wobei die Fördervorrichtung (2, 2a-d) eine Hängefördervorrichtung (2, 2a-d) mit einer Laufschiene (21, 21a-d) ist, wobei die Transporteinheiten an der Laufschiene (21, 21a-d) mit veränderlichem Abstand zueinander förderbare Laufwagen (41.1-41.8, 41a-d) sind, in welcher die Aufnahmeeinheiten (4.1 -4.8, 4a-d) förderbar sind, eine Zuführvorrichtung (3, 3a-d) zum Zuführen von Transportgütern (T), eine Transfervorrichtung (1, 1a-d), welche ausgebildet ist, die Transportgüter (T) von der Zuführvorrichtung (3, 3a-d) zu übernehmen, zu fördern und an die Aufnahmeeinheiten (4.1-4.8, 4a-d) zu übergeben, wobei die Transfervorrichtung (1, 1a-d) und die Aufnahmeeinheiten (4.1-4.8, 4a-d) bei der Übergabe der Transportgüter (T) gleichgerichtet bewegbar sind, **dadurch gekennzeichnet, dass** die Transfervorrichtung (1, 1a-d) Übergabefächer (12, 12a, 12b, 12d) zur Aufnahme der Transportgüter (T) aufweist, welche bewegbare Anschlagmittel aufweisen, die zwischen einer geschlossenen und einer offenen Position bewegbar sind und in der geschlossenen Position die Transportgüter (T) im jeweiligen Übergabefach (12, 12a, 12b, 1 2d) halten, wobei die Anschlagmittel vorzugsweise steuerbar sind.

2. Beschickungsvorrichtung (10, 10a-d) nach Patentanspruch 1, **dadurch gekennzeichnet, dass** die bewegbaren Anschlagmittel beim Bewegen von der geschlossenen zur offenen Position eine Aufnahmeöffnung (43.1, 43.2, 43.3) einer zu beschickenden Aufnahmeeinheit (4.1-4.8) öffnen und/oder offen halten.

3. Beschickungsvorrichtung (10, 10a-d) nach Patentanspruch 2, **dadurch gekennzeichnet, dass** die Anschlagmittel kurz vor der Übergabe der Transportgüter (T) an die Aufnahmeeinheiten (4.1-4.8) von der geschlossenen zur offenen Position bewegbar sind.

4. Beschickungsvorrichtung (10, 10a-d) nach einem der vorhergehenden Patentansprüche, **dadurch gekennzeichnet, dass** die Anschlagmittel als schwenkbare Klappen (14) ausgebildet sind, welche an den Wänden der Übergabefächer (12, 12a, 12b, 1 2d) angeordnet sind.

5. Beschickungsvorrichtung (10, 10a-d) nach Patentanspruch 4, **dadurch gekennzeichnet, dass** die Klappen (14) in einer offenen Position eine Erweiterung der Wände der Übergabefächer (12, 12a, 12b, 12d) bilden und dadurch die Transportgüter (T) führen.

6. Beschickungsvorrichtung (10, 10a-d) nach einem der vorangehenden Patentansprüche, **dadurch gekennzeichnet, dass** die Transfervorrichtung (1, 1a-d) Eingriffmittel (11) aufweist, welche mit den Aufnahmeeinheiten (4.1-4.8, 4a-d) wirkverbindbar sind.

7. Beschickungsvorrichtung (10, 10a-d) nach einem der vorangehenden Patentansprüche, **dadurch gekennzeichnet, dass** die Beschickungsvorrichtung (10, 10a-d) Ausrichtmittel zum Ausrichten der Orientierung von Taschen (42.1-42.8, 42a-d) vor und/oder bei und/oder nach der Übergabe der Transportgüter (T) an die Taschen (42.1-42.8, 42a-d) aufweist.

8. Beschickungsvorrichtung (10, 10a-d), nach Patentanspruch 7, **dadurch gekennzeichnet, dass** Ausrichtmittel an der Hängefördervorrichtung (2, 2a-d) oder an der Transfervorrichtung (1,1a-d) angeordnet sind.

9. Beschickungsvorrichtung (10, 10a-d) nach einem der vorhergehenden Patentansprüche, **dadurch gekennzeichnet, dass** die Beschickungsvorrichtung (10, 10a-d) Öffnungsmittel aufweist, welche ausgebildet sind, eine Aufnahmeöffnung (43.1, 43.2, 43.3, ...) einer zu beschickenden Aufnahmeeinheit (4.1-4.8, 4a-d) zu öffnen und/oder offen zu halten.

10. Beschickungsvorrichtung (10, 10a-d) nach Patentanspruch 9, **dadurch gekennzeichnet, dass** die Öffnungsmittel an der Hängefördervorrichtung (2, 2a-d) oder an der Transfervorrichtung (1, 1a-d) angeordnet sind.

## Claims

1. A loading device (10, 10a-d) for continuously loading receiving units (4.1-4.8, 4a-d) with transport goods (T), the loading device (10, 10a-d) comprising a plurality of receiving units (4.1-4.8, 4a-d), a conveying device (2, 2a-d), wherein the conveying device (2, 2a-d) is a suspension conveying device (2, 2a-d) with a running rail (21, 21a-d), wherein the transport units on the running rail (21, 21a-d) are conveyable carriages (41.1-41.8, 41a-d), in which the receiving units (4.1 -4.8, 4a-d) are conveyable, a feeding device (3, 3a-d) for feeding transport goods (T), a transfer device (1, 1a-d), which is configured to take over the transport goods (T) from the feeding device (3, 3a-d), to convey them and to transfer them to the receiving units (4.1-4.8, 4a-d), wherein the transfer device (1, 1a-d) and the receiving units (4.1 - 4.8, 4a-d) are movable in a rectified manner during the transfer of the transport goods (T), **characterized in that** the transfer device (1, 1a-d) comprises transfer trays (12, 12a, 12b, 12d) for retaining the transport goods (T), which comprise movable stopping means which are movable between a closed and an open position and, in the closed position, hold the transport goods (T) in the respective transfer tray (1 2, 1 2a, 1 2b, 12d), wherein the stopping means are preferably controllable.

2. The loading device (10, 10a-d) according to claim 1, **characterized in that** the movable stopping means, when being moved from the closed to the open position, open and/or hold open a receiving opening (43.1, 43.2, 43.3) of a receiving unit (4.1-4.8) to be loaded.

3. The loading device (10, 10a-d) according to claim 2, **characterized in that** the stopping means are movable from the closed to the open position shortly before the transport goods (T) are transferred to the receiving units (4.1 -4.8).

4. The loading device (10, 10a-d) according to one of the preceding claims, **characterized in that** the stopping means are designed as hinged flaps (14) which are arranged on the walls of the transfer trays (1 2, 1 2a, 1 2b, 1 2d).

5. The loading device (10, 10a-d) according to claim 4, **characterized in that,** in an open position, the flaps (14) form an extension of the walls of the transfer trays (12, 12a, 1 2b, 12d) and thereby guide the transport goods (T).

6. The loading device (10, 10a-d) according to one of the preceding claims, **characterized in that** the transfer device (1, 1a-d) comprises engagement means (11) which are interconnectable with the receiving units (4.1-4.8, 4a-d).

7. The loading device (10, 10a-d) according to one of the preceding claims, **characterized in that** the loading device (10, 10a-d) comprises alignment means for aligning the orientation of bags (42.1-42.8, 42a-d) before and/or during and/or after the transfer of the transport goods (T) to the bags (42.1-42.8, 42a-d).

8. The loading device (10, 10a-d), according to patent claim 7 , **characterized in that** alignment means are arranged on the suspension conveying device (2, 2a-d) or on the transfer device (1, 1a-d).

9. The loading device (10, 10a-d) according to one of the preceding claims, **characterized in that** the loading device (10, 10a-d) comprises opening means which are designed to open and/or keep open a receiving opening (43.1, 43.2, 43.3, ...) of a receiving unit (4.1-4.8, 4a-d) to be loaded.

10. The loading device (10, 10a-d) according to patent claim 9 , **characterized in that** the opening means are arranged at the suspension conveying device (2, 2a-d) or at the transfer device (1, 1a-d).

## Revendications

1. Dispositif de chargement (10, 10a-d) pour le chargement continu d'unités de réception (4.1-4.8, 4a-d) avec des marchandises à transporter (T), le dispositif de chargement (10, 10a-d) comprenant une pluralité d'unités de réception (4.1-4.8, 4ad), un dispositif de transport (2, 2a-d), le dispositif de transport (2, 2a-d) étant un dispositif de transport suspendu (2, 2a-d) avec un rail de roulement (21, 21a-d), les unités de transport sur le rail de roulement (21, 21a-d) sont transportable avec un écart variable les unes par rapport aux autres, des chariots (41 .1 -41 .8, 41a-d), dans lequel les unités de réception (4.1-4.8, 4a-d) sont transportable, un dispositif d'amenée (3, 3a-d) pour amener des marchandises à transporter (T), un dispositif de transfert (1, 1a-d), qui est conçu pour prendre en charge les marchandises à transporter (T) du dispositif d'amenée (3, 3a-d), les transporter et les transférer aux unités de réception (4.1 -4.8, 4a-d), le dispositif de transfert (1, 1a-d) et les unités de réception (4.1 -4.8, 4a-d) sont déplacées dans le même sens lors du transfert des marchandises à transporter (T), **caractérisé en ce que** le dispositif de transfert (1, 1a-d) comprenant des casiers de transfert (12, 12a, 12b, 12d) pour recevoir les marchandises à transporter (T), lesquels comprenant des moyens de butée mobiles qui sont déplacés entre une position fermée et une position ouverte et qui, dans la position fermée, maintiennent les marchandises à transporter (T) dans le casier de transfert respectif (12, 12a, 12b, 12d), les moyens de butée de préférence sont commandés.

2. Dispositif de chargement (10, 10a-d) selon la revendication 1,**caractérisé en ce que** les moyens de butée mobiles ouvrent et/ou maintiennent ouverte une ouverture de réception (43.1, 43.2, 43.3) d'une unité de réception (4.1-4.8) à charger lors du déplacement de la position fermée à la position ouverte.

3. Dispositif de chargement (10, 10a-d) selon la revendication 2, **caractérisé en ce que** les moyens de butée sont déplacés de la position fermée à la position ouverte peu avant le transfert des marchandises à transporter (T) aux unités de réception (4.1-4.8).

4. Dispositif de chargement (10, 10a-d) selon l'une des revendications précédentes, **caractérisé en ce que** les moyens de butée sont réalisés sous forme de clapets pivotants (14) qui sont disposés sur les parois des compartiments de transfert (12, 12a, 12b, 12d).

5. Dispositif de chargement (10, 10a-d) selon la revendication 4, **caractérisé en ce que** les volets (14) forment, dans une position ouverte, un élargissement des parois des compartiments de transfert (12, 12a, 1 2b, 12d) et guident ainsi les marchandises transportées (T).

6. Dispositif de chargement (10, 10a-d) selon l'une des revendications précédentes, **caractérisé en ce que** le dispositif de transfert (1, 1a-d) comprenant des moyens d'engagement (11) qui sont reliés fonctionnellement aux unités de réception (4.1 - 4.8, 4a-d).

7. Dispositif de chargement (10, 10a-d) selon l'une des revendications précédentes, **caractérisé en ce que** le dispositif de chargement (10, 10a-d) comprenant des moyens d'alignement pour aligner l'orientation de poches (42.1-42.8, 42a-d) avant et/ou lors et/ou après le transfert des marchandises transportées (T) vers les poches (42.1-42.8, 42a-d).

8. Dispositif de chargement (10, 10a-d), selon la revendication 7, **caractérisé en ce que** des moyens d'alignement sont disposés au dispositif de transport suspendu (2, 2ad) ou au dispositif de transfert (1, 1a-d).

9. Dispositif de chargement (10, 10a-d) selon l'une des revendications précédentes, **caractérisé en ce que** le dispositif de chargement (10, 10a-d) comprenant des moyens d'ouverture qui sont conçus pour ouvrir et/ou maintenir ouverte une ouverture de réception (43.1, 43.2, 43.3, ...) d'une unité de réception (4.1-4.8, 4a-d) à charger.

10. Dispositif de chargement (10, 10a-d) selon la revendication 9, **caractérisé en ce que** les moyens d'ouverture sont disposés sur le dispositif de transport suspendu (2, 2ad) ou sur le dispositif de transfert (1, 1a-d).
